# EUROPÄISCHE PATENTSCHRIFT

(11) **EP 2 670 564 B1**
(45) Veröffentlichungstag und Bekanntmachung des Hinweises auf die Patenterteilung: **08.01.2020**
(21) Anmeldenummer: 12706792.4
(22) Anmeldetag: 03.02.2012
(51) Int. Cl.: B23K 26/00, B23P 25/00

(54) **WERKZEUGWECHSELTRÄGER UND WERKZEUGSYSTEM**
TOOL-CHANGING CARRIER AND TOOL SYSTEM
SUPPORT CHANGEUR D'OUTIL ET SYSTÈME D'OUTIL

(30) Priorität: 04.02.2011 DE 102011000505
(43) Veröffentlichungstag der Anmeldung: 11.12.2013
(73) Patentinhaber: Fraunhofer-Gesellschaft zur Förderung der angewandten Forschung e.V., 80686 München (DE)
(72) Erfinder: FRANK, Jörg, 40545 Düsseldorf (DE); BAUSCH, Sascha, 52064 Aachen (DE); DEUTGES, Dominic, 47803 Krefeld (DE)
(74) Vertreter: Naeven, Ralf
(86) Internationale Anmeldenummer: PCT/EP2012/051841
(87) Internationale Veröffentlichungsnummer: WO 2012/104407

(56) Entgegenhaltungen:
- EP-A1- 0 491 242
- EP-A1- 1 228 835
- EP-A1- 1 273 382
- EP-A1- 1 649 966
- WO-A1-92/16334
- DE-A1- 4 326 236
- DE-U1- 8 911 733
- DE-U1- 9 419 673
- FR-A1- 2 608 484
- US-A- 5 008 510
- WIESNER F: "LASERINTEGRATION IN EIN CNC-DREH-FRASZENTRUM", F & M. FEINWERKTECHNIK MIKROTECHNIK MESSTECHNIK, HANSER, MUNCHEN, DE, Bd. 102, Nr. 9, 1. September 1994 (1994-09-01), Seiten 390-392, XP000465916, ISSN: 0944-1018

## Beschreibung

Die Erfindung betrifft ein Werkzeugsystem mit den Merkmalen des Oberbegriffs des Anspruchs 1.

Unter einem Werkzeugwechselträger wird ein Werkzeugträger verstanden, mit dem durch eine Relativbewegung zu einer Werkstückhalterung verschiedene Werkzeuge zeitlich nacheinander in eine Bearbeitungsposition gebracht werden können, insbesondere, um ein bearbeitendes Werkzeug durch ein anderes für eine nachfolgende Bearbeitung auszutauschen. Ein Werkzeugwechselträger sowie ein Werkzeugsystem der vorgenannten Art für Drehmaschinen sind beispielsweise aus der DE 196 133 77 B4 bekannt. Als zum System gehörender Werkzeugwechselträger ist dort ein Werkzeugrevolver offenbart, mit dem verschiedene austauschbare Werkzeuge durch eine geeignete Drehung des Revolvers nacheinander zur Einwirkung auf ein Werkstück in eine Bearbeitungsposition gebracht werden können. Eine Bearbeitung des Werkstückes mittels elektromagnetischer Strahlung ist nicht offenbart.

Aus der US 7,002,100 B2 ist eine Vorrichtung bekannt, bei der ein spanabhebendes Werkzeug und Laserstrahlung für die Bearbeitung des Werkstückes kombiniert eingesetzt werden. Hierzu wird ein Werkzeugträger, der sowohl das spanabhebende Werkzeug wie auch den Laser trägt, für die Bearbeitung relativ zu dem zu bearbeitenden Werkstück verfahren. Bei einer laserunterstützten Zerspanung kann das zu bearbeitende Material vor dem Eingriff des spanabhebenden Werkzeugs mit dem Laser entfestigt werden. Der Werkzeugträger dieses Standes der Technik ist kein einen Werkzeugrevolver umfassender Werkzeugwechselträger.

Die in der US 7,002,100 B2 offenbarten und ähnliche Lösungen bieten hinsichtlich des Einsatzes von elektromagnetischer Strahlung zur Bearbeitung des Werkstückes oder zur unterstützenden Strahlungsbeaufschlagung eine geringe Flexibilität. Der Austausch der Laserstrahlwerkzeuge ist in der Regel aufwändig. Soll ein Laserwerkzeug nachträglich in eine vorhandene Werkzeugmaschine eingebaut werden, geht dies in der Regel mit Verlust von Arbeitsraum einher. Oftmals fehlt der Schutz des optischen Systems vor Verunreinigungen und Schädigungen durch metallische Späne und Kühlschmiermittel während der konventionellen Zerspanung oder ein solcher Schutz wird aufwändig und mit Arbeitsraumverlust installiert.

Aus der DE 41 13 633 A1 ist eine Bearbeitungsvorrichtung mit zwei Pinolen bekannt. Eine der Pinolen umfasst einen Strahlungskanal sowie einen Laserbearbeitungskopf, während die zweite Pinole einen Fräskopf aufweist. Beide Pinolen werden über eine gemeinsame Antriebsspindel angetrieben. Ein Werkstück kann nacheinander durch den Laserbearbeitungskopf und durch den Fräskopf bearbeitet werden, wobei das Werkstück relativ zur Bearbeitungsvorrichtung bewegt wird. Es ist offenbart, für die Bearbeitung mit den Fräskopf den Laserbearbeitungskopf zu entfernen, da dieser der Fräsbearbeitung im Wege stehen kann. Ein Werkzeugrevolver ist hierdurch nicht offenbart. Gemäß dem Prinzip dieses Standes der Technik würde die Einrichtung weiterer Werkzeugaufnahmen einen erheblichen Platzbedarf mit sich führen.

Aus der JP 61164738 ist eine Bearbeitungsmaschinen bekannt, bei der unterschiedliche Werkzeugköpfe in ein und dieselbe Werkzeugaufnahme eingesetzt werden können. Dabei ist offenbart, ein Werkzeugmagazin vorzusehen, dass zum Beispiel einen Laserbearbeitungskopf und ein Schneidwerkzeug umfassen kann. Ein Werkzeugwechselträger im Sinne der diesseitigen Erfindung mit mindestens zwei Werkzeugaufnahmen ist hierdurch nicht offenbart.

Aus der US 5,367,061 ist eine Bearbeitungsmaschine mit einer einzelnen Spindel bekannt, die einen Durchgang für Laserstrahlung aufweist und eine abwechselnden Bearbeitung eines Werkstückes mittels Laserstrahlung und einem mechanischen Schneidwerkzeug erlaubt. Ein Werkzeugwechselträger mit mindestens zwei Werkzeugaufnahmen ist hierdurch nicht offenbart. Für eine Überarbeitung mit wechselnden Werkzeugköpfen, müssen die Werkzeugköpfe in der einzigen Werkzeugaufnahme ständig gewechselt werden. Diese Vorgehensweise ist zeit- und damit kostenintensiv.

Aus der DE 94 19 673 U1 ist ein Werkzeugsystem der eingangs genannten Art bekannt, welches einen Revolvergrundkörper und zwei Revolverdreheinheiten aufweist, von denen eine mit zerspanenden Werkzeugen bestückt ist und die andere verschiedene als optische Werkzeugköpfe zu betrachtende Objektive für die Laserbearbeitung umfasst. Laserstrahlung wird über ein Achsenrohr auf eine zentrale Optikeinheit im Revolvergrundkörper gerichtet und erreicht von dort den Laserrevolver. Der Laserrevolver selbst weist wiederum einen einzelnen flachen Umlenkspiegel auf, der die Strahlung auf die jeweiligen optischen Werkzeugköpfe richtet. Hier ist somit eine Aufteilung von Laserbearbeitung und mechanischer Bearbeitung auf zwei Revolverdreheinheiten vorgesehen.

JP H08 141857 A offenbart ein Werkzeugsystem mit einer Revolverdreheinheit, die einen optischen Werkzeugkopf neben weiteren mechanischen Bearbeitungswerkzeugköpfen aufweist. Eine als einzelner flacher Spiegel ausgebildete und in der Revolverdreheinheit zentral angeordnete zentrale Optikeinheit richtet die Laserstrahlung auf den optischen Werkzeugkopf.

JP H09 220680 A offenbart ebenfalls ein Werkzeugsystem mit einem Werkzeugrevolver, der einen optischen Werkzeugkopf neben weiteren mechanischen Bearbeitungswerkzeugköpfen aufweist. Hier wird jedoch die Laserstrahlung ohne Ablenkung in der Revolverdreheinheit zum optischen Werkzeugkopf geführt.

Aus dem Artikel "Laserintegration in ein CNC-Dreh-Fräszentrum" (Franz Wiesner; F & M FEINWERKTECHNIK MIKROTECHNIK MESSTECHNIK, Hanser München, Bd. 102, Nr. 9, S. 390-392) ist es bekannt, einen Laserkopf an der Stirnseite eines Werkzeugrevolvers für Drehwerkzeuge anzubringen. Der Laserkopf wird somit nicht in einer Aufnahme der Revolverdreheinheit eingebaut.

Die DE 43 26 236 A1 offenbart eine Vorrichtung zum Entgraten und Kantenbrechen von Werkstücken, die neben einem ersten Werkzeugrevolver mit spanenden Werkzeugen einen zweiten Werkzeugrevolver aufweist, der zum einen ein spanendes Werkzeug und zum anderen einen optischen Werkzeugkopf zur Laserbearbeitung aufweist. Die Laserstrahlung wird über ein am Werkzeugrevolver vorbeilaufendes Glasfaserkabel in den optischen Werkzeugkopf eingeleitet.

Aus der FR 2 608 484 A1 ist eine Vorrichtung zur Laserbearbeitung von Werkstücken bekannt, die einen Objektiv-Revolver für verschiedene Laserobjektive aufweist.

US 5 008 510 A offenbart eine Stanzmaschine mit einer integrierten Laser-Schneideinheit. Die aus einer mit Abstand zur Stanzmaschine angeordneten Laserquelle stammende Laserstrahlung wird über einen einzelnen Spiegel zum optischen Werkzeugkopf geleitet.

WO 92/16334 A1 und EP 0 491 242 A1 offenbaren jeweils eine Werkzeugmaschine ohne Werkzeugrevolver, bei der ein optischer Werkzeugkopf zur Laserbearbeitung durch einen spanend bearbeitenden Werkzeugkopf ausgetauscht und in dieselbe Werkzeugaufnahme eingesetzt werden kann.

EP 1 228 835 A1 offenbart einen optischen Kopf für ein Laserschweißsystem, welcher einen verstellbaren Spiegel für die Laserstrahlung aufweist. Zudem kann eine Fokuslinse in Strahlrichtung verschoben werden, so dass der Laserfokus für den Schweißprozess variierbar ist. Insgesamt soll damit ein dreidimensionaler Schweißprozess erleichtert werden.

Der Erfindung liegt die Aufgabe zu Grunde, ein Werkzeugsystem der eingangs genannten Art zur Verfügung zu stellen, welches alternative und verbesserte Möglichkeiten zur Zuführung der Laserstrahlung bietet.

Diese Aufgabe wird bei einem Werkzeugsystem der eingangs genannten Art mit den kennzeichnenden Merkmalen des Anspruchs 1 gelöst.

Vorteilhafte Ausgestaltungen der Erfindung sind durch die Unteransprüche gegeben.

Ein Werkzeugwechselträger, der ein Werkzeugrevolver mit einer relativ zu einem Revolvergrundkörper drehbar angeordneten und mindestens zwei Werkzeugaufnahmen aufweisenden Revolverdreheinheit ist, und Mittel zur Weiterleitung elektromagnetischer Strahlung aufweist, erlaubt in besonders vorteilhafter Weise die Verwendung optischer Werkzeugköpfe, die den Einsatz elektromagnetischer Strahlung, insbesondere von Laserstrahlung, für die Bearbeitung eines Werkstückes ermöglichen. Mit der Anordnung eines optischen Werkzeugkopfes an einem solchen Werkzeugwechselträger entfällt ein gesonderter Montageaufwand oder Aufbau zu dessen Installation außerhalb des Werkzeugwechselträgers, wodurch der Verlust an Arbeitsraum minimal gehalten wird. Ist der Werkzeugwechselträger mit einer einheitlichen, insbesondere genormten, Werkzeugaufnahme versehen und weist der mindestens eine optische Werkzeugkopf einen Werkzeughalter zum Eingriff in eine solche Werkzeugaufnahme auf, kann die Installation und der Wechsel des optischen Werkzeuges besonders einfach und schnell durchgeführt werden.

Der optische Werkzeugkopf kann mit weiteren Werkzeugen zusammenarbeiten, die außerhalb des Werkzeugwechselträgers angeordnet sind, beispielsweise mit spanabhebenden Werkzeugen, Schweißvorrichtungen, z.B. zur Durchführung von Hybridschweißverfahren, oder Materialzuführungseinheiten, z.B. zur Zufuhr und/oder Positionierung von Zusatzwerkstoff(en), z. B. einem Draht für Laserbeschichtungsverfahren.

Aber auch im optischen Werkzeugkopf selbst können weitere Funktionen und Werkzeuge, z.B. spanabhebender Art oder zur Zufuhr von Zusatzwerkstoff(en) oder für die Schweißbearbeitung integriert sein.

Es kann vorteilhaft sein, Paare aus einem optischen Werkzeugkopf mit einem weiteren vom Werkzeugwechselträger getragenen Werkzeugkopf zu bilden, die beide gleichzeitig oder wechselweise aufeinander abgestimmt auf ein Werkstück einwirken. Der weitere Werkzeugkopf kann z. B. ebenfalls ein optischer Werkzeugkopf sein oder ein spanabhebendes Werkzeug tragen oder ein Schweiß-Werkzeugkopf zur Schweißbearbeitung des Werkstückes sein. Weiter alternativ kann der weitere Werkzeugkopf auch zur Materialzuführung dienen, z.B. zur Zuführung eines Zusatzstoffes bei einem mittels des optischen Werkzeugkopfes durchgeführten Bearbeitungsverfahren, z. B. Laser-Schweißverfahren, Lötverfahren, drahtbasierten Laserbeschichten oder Laserauftragsschweißen. Der Werkzeugkopf kann hierfür z. B. eine Drahtförder- und/oder Drahtpositioniereinheit, vorzugsweise elektro-mechanischer Art, aufweisen, mit der der Zusatzwerkstoff an die Bearbeitungsstelle transportiert wird.

Der Werkzeugwechselträger kann auch mehrere aufeinander abgestimmte Paare von Werkzeugköpfen tragen, beispielsweise ein Paar zur stirnseitigen Bearbeitung eines Werkstückes und ein zweites Paar zur Außenrundbearbeitung eines anderen oder desselben Werkstückes. Dabei kann der jeweilige optische Werkzeugkopf z. B. so ausgerichtet sein, dass die eingesetzte elektromagnetische Strahlung das Werkstück unmittelbar vor dem Zerspanwerkzeug bearbeitet, zum Beispiel zur Entfestigung. Es ist auch denkbar, dass ein Werkzeugkopf wechselweise mit zwei benachbarten Werkzeugköpfen zusammenwirkt, z. B. ein optischer Werkzeugkopf mit einem ersten spanabhebenden, beispielsweise eine Fräse tragenden Werkzeugkopf, sowie mit einem auf der anderen Seite benachbarten zweiten spanabhebenden, beispielsweise einen Schleifstift tragenden Werkzeugkopf. Hierfür kann der optische Werkzeugkopf, vorzugsweise ferngesteuert, veränderbar sein, z. B. in der Ausrichtung der den Werkzeugkopf verlassenden elektromagnetischen Strahlung zunächst zum Zusammenwirken mit dem ersten und anschließend mit dem zweiten spanabhebenden Werkzeugkopf.

Darüber hinaus ist es auch möglich, einen spanabhebenden Werkzeugkopf mit mehreren optischen Werkzeugköpfen zu kombinieren. Im letzteren Fall könnte beispielsweise ein erster Laserstrahl für eine Entfestigung des Materials sorgen und ein zweiter elektromagnetischer Strahl im Nachlauf nach der Zerspanung einen Härtungsprozess durchführen, z.B. mittels Laserhärten. Die optischen Werkzeuge können jeweils auf einem gesonderten vom Werkzeugwechselträger getragenen Werkzeugkopf angeordnet sein. Eines der optischen Werkzeuge kann jedoch auch abseits des Werkzeugwechselträgers vorgesehen sein.

Die elektromagnetische Strahlung wird durch den Werkzeugwechselträger hindurch zu dem in der Einsatzposition befindlichen optischen Werkzeugkopf geführt, zum Beispiel über einen als Bohrung ausgeführten optischen Kanal. Dabei kann die Bohrung zur Passage eines freien Strahls vorgesehen sein, selbst über Reflexionen an der Innenwand der Bohrung die elektromagnetische Strahlung leiten oder zur Durchführung für ein oder mehrere Lichtleitkabel dienen. Die Bohrung verläuft durch den Revolvergrundkörper.

Innerhalb einer am Revolvergrundkörper drehbar angebrachten Revolverdreheinheit oder Revolverscheibe wird die elektromagnetische Strahlung über eine zentrale Optikeinheit zu dem in der Einsatzposition befindlichen optischen Werkzeugkopf umgelenkt und nötigenfalls bereits kollimiert. Die zentrale Optikeinheit kann an den die zentrale Welle aufweisenden Revolvergrundkörper angeflanscht werden, so dass die elektromagnetische Strahlung stets auf den in Einsatzposition eingeschwenkten optischen Werkzeugkopf einstrahlt. Hierfür ist die Werkzeugaufnahme transparent für die eingesetzte elektromagnetische Strahlung ausgebildet. Zusätzlich zu der für die optische Gasse oder für die Aufnahme von Lichtleitkabeln gebildeten Bohrung können weitere Bohrungen für die Zuführung von Druckluft oder Schutzgas, Zu- und/oder Abführung von Kühl- und/oder Schmiermitteln und zur Zufuhr von elektrischen und/oder Steuerleitungen vorgesehen sein. Diese Medien können in aus dem Stand der Technik bekannter Weise über die Revolverdreheinheit zum Bearbeitungsort geführt werden.

Die zentrale Optikeinheit kann jedoch alternativ an der Revolverdreheinheit fixiert sein. Eine solche Lösung kann insbesondere deshalb vorteilhaft sein, weil die elektromagnetische Strahlung mit Abstand zur Mittellängsache der Revolvergrundeinheit, d. h. dezentral, durchgeführt wird. Hierfür ist die zentrale Optikeinheit derart kranz- oder ringförmig aufgebaut dass die elektromagnetische Strahlung bei jeder Rastposition der Revolverdreheinheit auf die zentrale Optikeinheit trifft und hierdurch zum Einsatzort hin gelenkt wird.

Im optischen Werkzeugkopf ist eine Werkzeug-Optikeinheit zur Umlenkung und/oder Formung des elektromagnetischen Strahls vorgesehen, zum Beispiel Spiegel und/oder Linsen. Die Strahlumlenkung und/oder Strahlformung kann dabei verstellbar sein, um die Austrittsrichtung und die Strahlform korrigieren oder an sich verändernde geometrische Verhältnisse anpassen zu können. Diese Verstellmöglichkeit kann mechanisch für eine manuelle Verstellung oder aber ferngesteuert, z .B. elektromechanisch, sein. Es ist auch denkbar, die elektromagnetische Strahlung mit sich während der Bearbeitung ändernder Fokuseinstellung und/oder Strahlrichtung und/oder mit Strahlunterbrechung, z.B. durch einen gepulsten Strahl, einzusetzen.

Der Wechsel der Werkzeugpositionen am Werkzeugwechselträger kann elektro-, mechanischer oder hydraulischer Art sein. Die neben den optischen Werkzeugköpfen eingesetzten Werkzeuge können im Bedarfsfall angetrieben sein, z.B. im Falle eines Bohrers.

Das erfindungsgemäße Werkzeugsystem eignet sich insbesondere für die Bearbeitung metallischer Bauteile mit lokalen Verschleißschutzschichten, wie zum Beispiel Wellen mit lasergehärteten Lagersitzen, Spindeln mit laserbeschichteten Ventilsitzen oder keramischen Bauteilen, zum Beispiel Lagerschalen, die laserunterstützt gedreht werden.

Das erfindungsgemäße Werkzeugsystem kann in bekannte und bereits vorhandene Werkzeugmaschinen eingebaut werden, indem der konventionelle Werkzeugwechselträger ausgetauscht wird. Die Zuführung der elektromagnetischen Strahlung über Lichtleitkabel ist in aller Regel ohne Arbeitsraumverlust möglich. Die automatisierte Abfolge von Bearbeitungsschritten mit Unterstützung elektromagnetischer Strahlung, insbesondere Laser, unter Einsatz unterschiedlicher Werkzeuge und/oder unterschiedlicher optischer Werkzeugköpfe wird durch das erfindungsgemäße Werkzeugsystem erst ermöglicht oder zumindest wirtschaftlicher. Im Folgenden ist schematisch ein bevorzugtes Ausführungsbeispiel des erfindungsgemäßen Werkzeugsystems anhand von Figuren dargestellt.

Es zeigt schematisch
- Fig. 1:: in einem perspektivischen Querschnitt einen Werkzeugrevolver mit innerer Strahlführung bei stirnseitiger Bearbeitung eines Werkstückes, bei einem nicht beanspruchten Werkzeugsystem,
- Fig. 2:: den Werkzeugrevolver gemäß Fig. 1 bei einer Außenrund-Bearbeitung,
- Fig. 3:: perspektivisch einen Werkzeugrevolver mit äußerer Strahlführung, bei stirnseitiger Bearbeitung, bei einem nicht beanspruchten Werkzeugsystem,
- Fig. 4:: den Werkzeugrevolver gemäß Fig. 3 bei der Außenrund-Bearbeitung,
- Fig. 5:: einen optischen Werkzeugkopf im seitlichen Querschnitt sowie bei Ansicht von unten,
- Fig. 6:: einen weiteren optischen Werkzeugkopf im seitlichen Querschnitt und in Ansicht von unten,
- Fig. 7:: einen weiteren optischen Werkzeugkopf im seitlichen Querschnitt und in Ansicht von unten,
- Fig. 8:: einen Werkzeugrevolver mit einem Materialzuführungskopf, bei einem nicht beanspruchten Werkzeugsystem,
- Fig. 9:: einen Werkzeugrevolver mit dezentraler Strahlungsführung,
- Fig. 10:: einen Werkzeugrevolver mit dezentraler Strahlungsführung und internem Werkzeugantrieb und
- Fig. 11:: einen Werkzeugrevolver mit externer Strahlungsführung und extern geführtem Werkzeugantrieb, bei einem nicht beanspruchten Werkzeugsystem.

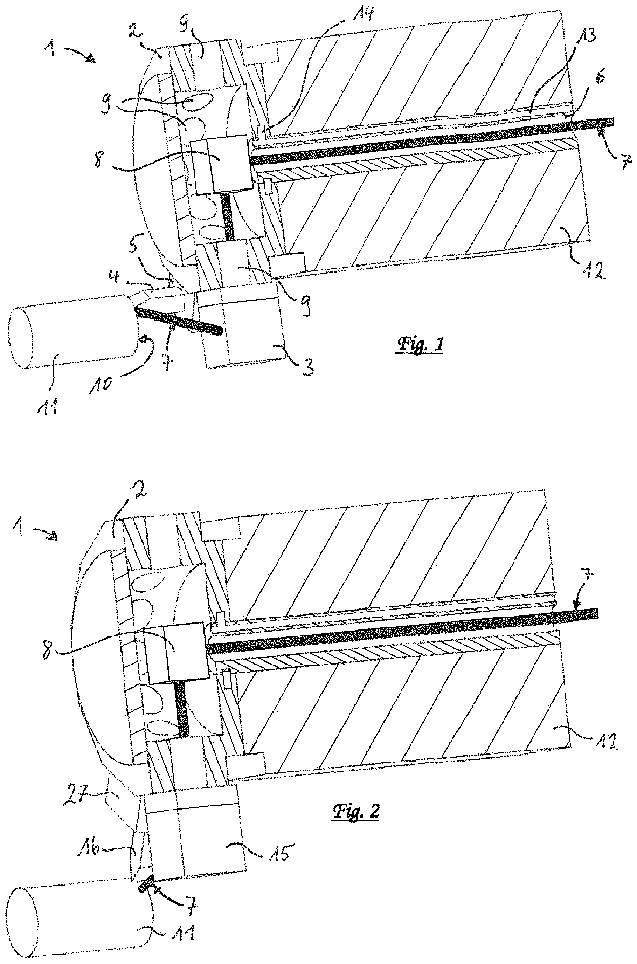

Fig. 1 zeigt in einem perspektivischen Querschnitt einen Werkzeugrevolver 1 mit einem an einer Revolverscheibe 2 angeordneten optischen Werkzeugkopf 3 und einem ebenfalls an der Revolverscheibe 2 fixierten spanabhebenden Werkzeugkopf 5 mit einem Werkzeug 4.

Über eine zentrale Bohrung 6, die durch die Drehachse eines Grundkörpers 12 des Werkzeugrevolvers 1 verläuft, wird der Revolverscheibe 2 ein Laserstrahl 7 zugeführt. Dies kann über einen gesonderten hier nicht dargestellten Lichtleiter erfolgen, der direkt oder mittelbar an einer hier ebenfalls nicht dargestellten Laserquelle angeschlossen ist. Die Laserlichtquelle kann sich somit außerhalb des Werkzeugsystems und auch außerhalb einer das Werkzeugsystem nutzenden Werkzeugmaschine befinden.

Nach Austritt aus der zentralen Bohrung 6 trifft der Laserstrahl 7 auf eine zentrale Optikeinheit 8, die den Laserstrahl 7 in Richtung auf den optischen Werkzeugkopf 3, z. B. mittels eines hier nicht dargestellten, in der zentralen Optikeinheit 8 angeordneten Spiegels, ablenkt. Die zentrale Optikeinheit 8 kann auch strahlformend ausgebildet sein, so z. B. zur Kollimation oder Fokussierung der Laserstrahlung 7. Die Revolverscheibe 2 verfügt über eine Vielzahl von Werkzeugaufnahmen 9. An zwei benachbarten Werkzeugaufnahmen 9 sind der optische Werkzeugkopf 3 und der das spanabhebende Werkzeug 4 haltende Werkzeugkopf 5 fixiert. Die den optischen Werkzeugkopf 3 haltende Werkzeugaufnahme 9 ist für den Laserstrahl 7 durchlässig gestaltet.

Auf eine Stirnseite 10 eines zu bearbeitenden Werkstückes 11 wirken gleichzeitig der aus dem optischen Werkzeugkopf 3 austretende Laserstrahl 7 und das spanabhebende Werkzeug 4. Der Laserstrahl 7 dient zur Unterstützung der spanabhebenden Bearbeitung, zum Beispiel zur Erhöhung der Duktilität des Werkstückmaterials unmittelbar vor dem Eingriff des spanabhebenden Werkzeugs 4.

In Fig. 1 nicht dargestellt, aber regelmäßig vorhanden sind weitere Werkzeuge in den verbleibenden Werkzeugaufnahmen 9 fixiert, so dass durch eine einfache Drehung der Revolverscheibe 2 relativ zum Revolvergrundkörper 12 das Bearbeitungswerkzeug und/oder der optische Werkzeugkopf in die Bearbeitungsposition gewechselt werden kann.

Durch den Werkzeugrevolver 1 verlaufen um den optischen Kanal 6 herum verteilt axiale Durchführungen, jeweils z.B. für Druckluft oder Schutzgas, Kühl- und Schmierstoffe und elektrische Leiter. Von diesen Durchführungen ist in Fig. 1 lediglich ein Durchführungskanal 13 sichtbar, z.B. für die Druckluft. Der Durchführungskanal 13 endet in einer Drehdurchführung 14, die die Durchführung der Druckluft vom Revolvergrundkörper 12 zur Revolverscheibe 2 erlaubt. Innerhalb der Revolverscheibe 2 wird die Druckluft zu einem oder mehreren hier nicht dargestellten Ausgängen auf der Umfangsseite der Revolverscheibe 2 geführt, wobei die Ausgänge jeweils so gestaltet sind, dass sie nur ein in Einsatzposition befindliches Werkzeug oder einen in Einsatzposition befindlichen Werkzeugkopf versorgen.

Fig. 2 zeigt den Werkzeugrevolver 1 aus Fig. 1, wobei nun allerdings ein anderer optischer Werkzeugkopf 15 und ein anderes spanabhebendes Werkzeug 16 in Einsatzposition sind. Dieser optische Werkzeugkopf 15 und das spanabhebende Werkzeug 16 am spanabhebenden Werkzeugkopf 27 wurden durch eine Drehung der Revolverscheibe 2 relativ zum Revolvergrundkörper 12 in die Einsatzposition gebracht. Die zuvor für die stirnseitige Bearbeitung des Werkstücks 11 verwendeten Werkzeuge 4 und 3 sind in Fig. 2 nicht mehr dargestellt, befinden sich in der Praxis aber selbstverständlich noch an der Revolverscheibe 2 und sind aus der Einsatzposition herausgedreht. Die zentrale Optikeinheit 8 ist auch nach der Drehung in ihrer Position relativ zum Revolvergrundkörper 12 unverändert und folgt somit nicht der Drehung der Revolverscheibe 2. Es wird nur die Werkzeugaufnahme 9 mit dem Laserstrahl 7 versorgt, die einen daran fixierten optischen Werkzeugkopf 3 (in Fig. 1) bzw. 15 (in Fig. 2) in seiner Einsatzposition trägt. Für den Fall, dass kein optischer Werkzeugkopf 3 oder 15 in der Einsatzposition befindlich ist, kann die Zuführung von Laserstrahlung zur zentralen Optikeinheit 8 unterbrochen werden. Dies kann automatisch über einen der Revolverscheibe 2 zugeordneten und die Relativposition zum Revolvergrundkörper 12 feststellenden Sensor erfolgen.

Der andere optische Werkzeugkopf 15 und das andere spanabhebende Werkzeug 16 werden zur Außenrund-Bearbeitung des Werkstückes 11 eingesetzt. Hierfür bedurfte es auch einer Relativbewegung zwischen Werkzeugrevolver 1 und Werkstück 11, die zum Beispiel von einem den Werkzeugrevolver 1 haltenden und hier nicht dargestellten Maschinenelement oder durch eine ebenfalls nicht dargestellte Werkstückspindel vollzogen werden kann.

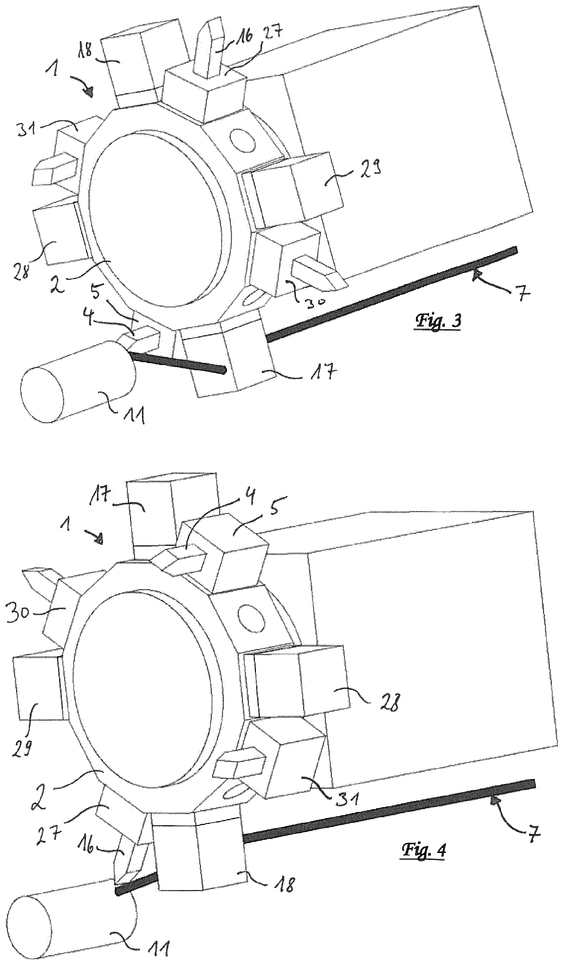

Die Fig. 3 und 4 zeigen schematisch nunmehr in rein perspektivischer Ansicht einen Werkzeugrevolver 1 bei einer stirnseitigen (Fig. 3) bzw. einer Außenrundbearbeitung (Fig. 4) des Werkstückes 11, wobei jedoch anders als im Ausführungsbeispiel gemäß den Fig. 1 und 2 der Laserstrahl 7 am Gehäuse des Werkzeugrevolvers 1 vorbei zum optischen Werkzeugkopf 17 (Fig. 3) bzw. 18 (Fig. 4) geführt wird. Die Revolverscheibe 2 weist nun neben den optischen Werkzeugköpfen 17 und 18 sowie den spanabhebenden Werkzeugköpfen 5 und 27 weitere optische Werkzeugköpfe 28 und 29 sowie weitere spanabhebende Werkzeugköpfe 30 und 31 auf.

Die spanabhebenden Werkzeuge 4 (Fig. 3) und 16 (Fig. 4) sind mit den spanabhebenden Werkzeugen 4 und 16 in den Fig. 1 bzw. 2 identisch. Die optischen Werkzeugköpfe 17 und 18 sind hingegen an die andere Laserlichtzuführung angepasst. Die Laserstrahlführung außerhalb des Werkzeugrevolvers 1 verringert den Aufwand für die optische Strahlführung im Vergleich zu den Ausführungsformen der Fig. 1 und 2, da im Werkzeugrevolver 1 keine gesonderte Bohrung für die Laserlichtzuführung vorgesehen werden muss. Die Zuführung am Werkzeugrevolver 1 vorbei kann mittels eines offenen optischen Pfades, der auch von einer hier nicht gezeigten Umhausung umgeben sein kann, oder mittels eines Lichtleiters erfolgen, wobei allerdings beide Anordnungen im Vergleich zur Führung der Laserstrahlung durch den Werkzeugrevolver 1 hindurch anfälliger gegen Störungen von außen sein können.

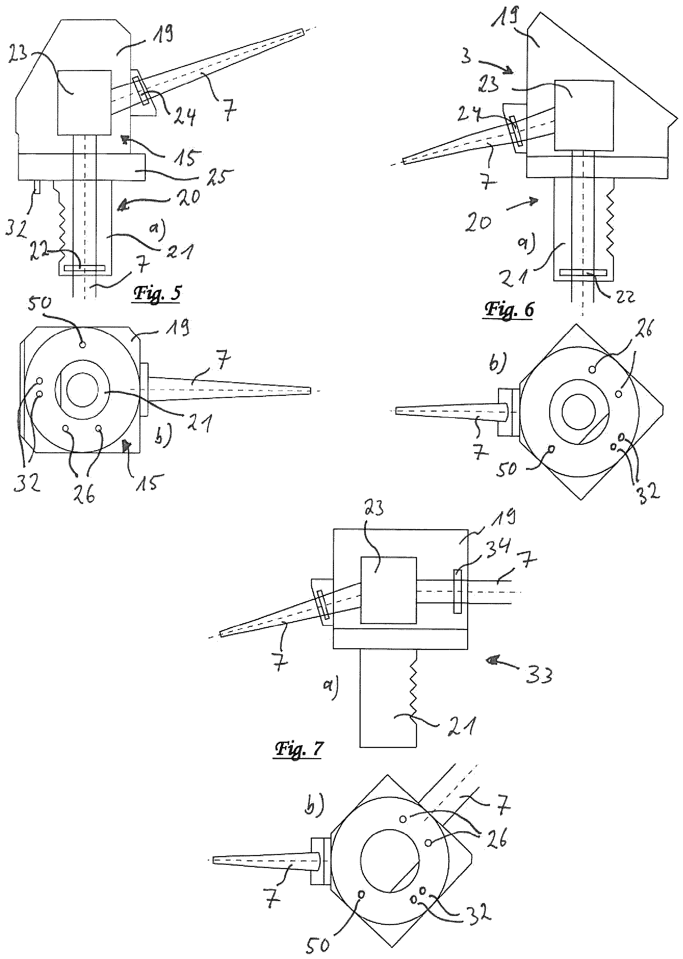

Die Fig. 5 und 6 zeigen zwei verschiedene optische Werkzeugköpfe 15 und 3 für die stirnseitige Bearbeitung (Fig. 6) bzw. für die Außenrund-Bearbeitung (Fig. 5) eines Werkstückes (siehe Fig. 1 und 2), für den Fall, dass die in den Fig. 5 und 6 ebenfalls dargestellte Laserstrahlung 7 durch den Revolvergrundkörper 12 geführt wird.

Fig. 5a) und Fig. 6a) zeigen den jeweiligen optischen Werkzeugkopf 15 bzw. 3 in einem Querschnitt sowie Fig. 5b) und Fig. 6b) in einer Ansicht von unten.

Im Folgenden wird zunächst der optische Werkzeugkopf 15 der Fig. 5 näher beschrieben. Ein Gehäuse 19 ist an einer Halteeinheit 20 mit zum Eingriff in die Werkzeugaufnahme 9 vorgesehenem, vorzugsweise standardisierten Halteelement 21 fixiert. Das Halteelement 21 weist revolverseitig ein Schutzglas 22 auf, durch das der Laserstrahl 7 in das eine durchgehende Bohrung aufweisende Halteelement 21 eintreten kann. Im Inneren des Gehäuses 19 trifft der Laserstrahl 7 auf eine Werkzeug-Optikeinheit 23, die zum Beispiel einen hier nicht dargestellten Spiegel zur Strahlungsumlenkung aufweisen kann. Die Werkzeug-Optikeinheit 23, die auch strahlformend, z. B. fokussierend ausgebildet sein kann, lenkt den Laserstrahl 7 durch ein Austrittsschutzglas 24 hindurch aus dem optischen Werkzeugkopf 15 hinaus.

Bei montiertem optischem Werkzeugkopf 15 setzt eine Auflageplatte 25 auf den Außenumfang der in den Fig. 1 bis 4 dargestellten Revolverscheibe 2 auf. Die Auflageplatte 25 enthält zwei Kühlanschlüsse 26 für die Zufuhr und die Abfuhr eines zur Kühlung des optischen Werkzeugkopfes 15 vorgesehenen Kühlmittels. Die Kühlanschlüsse 26 wirken bei eingesetztem optischem Werkzeugkopf 5 mit entsprechenden, in den Fig. 1 bis 4 nicht dargestellten Ein- bzw. Ausgängen an der Revolverscheibe 2 zusammen.

Des Weiteren sind elektrische Anschlüsse 32 vorgesehen, über die eine Verstellung der Werkzeug-Optikeinheit 23, z. B. in Bezug auf die Strahlausrichtung, mit Strom versorgt und/oder gesteuert werden kann. Entsprechende Gegenkontakte (nicht dargestellt) sind in der Revolverscheibe 2 (siehe z. B. Fig. 2) vorgesehen. Ein Druckluftanschluss 50 erlaubt die Zufuhr von Druckluft.

Der in Fig. 6 dargestellte optische Werkzeugkopf 3 unterscheidet sich von dem der Fig. 5 lediglich durch eine andere Form des Gehäuses 19 und der Austrittsrichtung für die Werkzeug-Optikeinheit 23. Ansonsten wird auf die Beschreibung der entsprechenden Teile in Fig. 5 verwiesen.

Fig. 7 zeigt einen optischen Werkzeugkopf 33, wie er für die externe Strahlführung entsprechend zu den Fig. 3 oder 4 einsetzbar ist. Der Eintritt des Laserstrahls 7 erfolgt dann nicht über das Halteelement 21 sondern über ein Schutzglas 34 im Gehäuse 19. Ansonsten entspricht dieser optische Werkzeugkopf 33 im Wesentlichen den Werkzeugköpfen gemäß den Fig. 5 und 6, weshalb auf die entsprechende Beschreibung verwiesen wird.

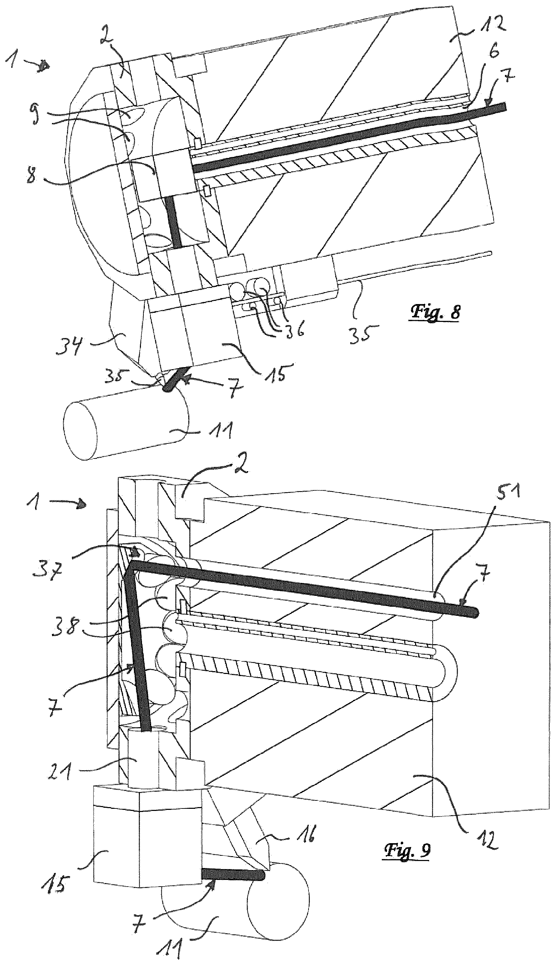

Fig. 8 zeigt einen Werkzeugrevolver 1 ähnlich dem in Fig. 1 oder 2. Gleiche Bezugszeichen bedeuten einander entsprechende Teile des Werkzeugrevolvers 1, weshalb auf die entsprechenden Beschreibungsteile zu den Fig. 1 und 2 verwiesen wird. Anders als in den Fig. 1 und 2 weist der Werkzeugrevolver 1 gemäß Fig. 8 einen Materialzuführungskopf 34 auf, mit dem ein Draht 35 einer Bearbeitungsstelle auf dem Werkzeug 11 zugeführt wird. Der Draht 35 kann zum Beispiel Zusatzmaterial für eine Oberflächenbeschichtung mittels des Laserstrahls 7 sein. Der Vortrieb des Drahtes 35 wird mittels Drahtförderrollen 36 erreicht. Im Materialzuführungskopf 34 wird der Draht 35 in Richtung auf die Bearbeitungsstelle gelenkt. Auch der Materialzuführungskopf 34 kann Mittel zum Antrieb des Drahtes 35 aufweisen.

Fig. 9 zeigt einen Werkzeugrevolver 1 mit einer dezentralen Strahlführung. Das heißt der Laserstrahl 7 wird nicht durch die Mittellängsachse des Grundkörpers 12 geführt sondern durch einen durch den Grundkörper 12 laufenden gesonderten Strahlungsdurchgang 51. Die Laserstrahlung kann auch hier als freier Laserstrahl 7 durch den Strahlungsdurchgang 51 gerichtet werden. In gleicher Weise ist es aber auch möglich, die Laserstrahlung 7 mittels Lichtleitfasern durch den Strahlungsdurchgang 51 zu führen. Die Laserstrahlung 7 trifft in der Revolverscheibe 2 auf eine kranzförmige zentrale Optikeinheit 37, die aus einer Abfolge einzelner Spiegel 38 zusammengesetzt ist. Die Spiegel 38 richten die Laserstrahlung 7 stets auf den in Bearbeitungsposition befindlichen optischen Werkzeugkopf 18, der in Fig. 9 zur Außenrundbearbeitung des Werkstücks 11 dient. Der Laserstrahl 7 fällt hierfür durch das Halteelement 21 für den optischen Werkzeugkopf 15. Sobald ein anderer optischer Werkzeugkopf in die Bearbeitungsposition gedreht wird, erfolgt die hierfür vorgesehene Strahlungsumlenkung des Laserstrahls 7 an einem anderen Spiegel 38. Die Spiegel 38 können auch strahlformend, zum Beispiel konkav, für eine Fokussierung ausgebildet sein. In Fig. 9 wird das Werkstück 11 außerdem mit einem spanabhebenden Werkzeug 16 bearbeitet.

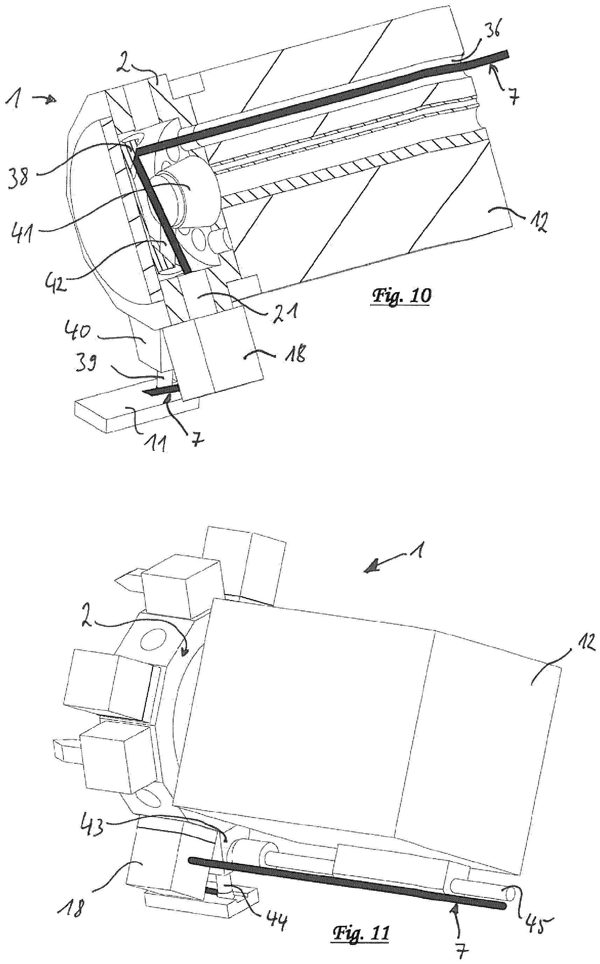

Fig. 10 zeigt einen Werkzeugrevolver 1 mit dezentraler Führung der Laserstrahlung 7 ähnlich dem Werkzeugrevolver 1 gemäß Fig. 9. Im Unterschied zu dem Werkzeugrevolver 1 in Fig. 9 zeigt der Werkzeugrevolver 1 gemäß Fig. 10 ein angetriebenes spanabhebendes Werkzeug 39 an einem Werkzeugkopf 40. Bei dem angetriebenen Werkzeug 39 kann es sich zum Beispiel um eine Fräse handeln. Ein Motor 41 für den Antrieb des Werkzeuges 39 sitzt im Inneren der Revolverscheibe 2 und wird in hier nicht dargestellter Weise über den Grundkörper 12 mit elektrischer Energie versorgt und gesteuert. Der Antrieb wird mittels einer Getriebestange 42 auf das angetriebene Werkzeug 39 übertragen. Motor 41 und Getriebestange 42 sind mit dem Revolvergrundkörper 12 verbunden und fixiert. Dadurch können unterschiedliche Werkzeuge in Bearbeitungsposition gedreht und über eine Kupplung durch den Motor 41 angetrieben werden. Die Laserstrahlung 7 aus dem optischen Werkzeugkopf 18 kann zur Entfestigung des Materials des zu bearbeitenden Werkstückes 11 dienen.

Fig. 11 zeigt schließlich einen Werkzeugrevolver 1, bei dem ebenfalls ein angetriebener spanabhebender Werkzeugkopf 43 mit einem angetriebenen Werkzeug 44 eingesetzt wird. Anders als in Fig. 10 erfolgt der Antrieb über eine außerhalb des Grundkörpers 12 verlaufende Getriebestange 45. Gleichzeitig wird der optische Werkzeugkopf 18 mit externer Zuführung des Laserstrahls 7 eingesetzt.

### Bezugszeichenliste

- 1: Werkzeugrevolver
- 2: Revolverscheibe
- 3: optischer Werkzeugkopf
- 4: spanabhebendes Werkzeug
- 5: spanabhebender Werkzeugkopf
- 6: Bohrung
- 7: Laserstrahl
- 8: zentrale Optikeinheit
- 9: Werkzeugaufnahme
- 10: Stirnseite
- 11: Werkstück
- 12: Revolvergrundkörper
- 13: Durchführungskanal
- 14: Drehdurchführung
- 15: optischer Werkzeug kopf
- 16: spanabhebendes Werkzeug
- 17: optischer Werkzeug kopf
- 18: optischer Werkzeug kopf
- 19: Gehäuse
- 20: Halteeinheit
- 21: Halterelement
- 22: Schutzglas
- 23: Werkzeug-Optikeinheit
- 24: Austrittsschutzglas
- 25: Auflageplatte
- 26: Kühlanschluss
- 27: spanabhebender Werkzeugkopf
- 28: optischer Werkzeugkopf
- 29: optischer Werkzeugkopf
- 30: spanabhebender Werkzeugkopf
- 31: spanabhebender Werkzeugkopf
- 32: elektrischer Anschluss
- 33: optischer Werkzeugkopf
- 34: Materialzuführungskopf
- 35: Draht
- 36: Strahlungsdurchgang
- 37: kranzförmige zentrale Optikeinheit
- 38: Spiegel
- 39: angetriebenes Werkzeug
- 40: Werkzeug kopf
- 41: Motor
- 42: Getriebestange
- 43: angetriebener Werkzeugkopf
- 44: angetriebenes Werkzeug
- 45: Getriebestange
- 50: Druckluftanschluss
- 51: Strahlungsdurchgang

## Patentansprüche

1. Werkzeugsystem umfassend einen Werkzeugwechselträger mit mindestens zwei Werkzeugaufnahmen (9) und mindestens zwei zur Fixierung an den Werkzeugaufnahmen (9) eingerichteten Werkzeugköpfen (3, 5, 15, 17, 18, 27, 34, 40, 43), wobei
der Werkzeugwechselträger ein Werkzeugrevolver (1) mit einer relativ zu einem Revolvergrundkörper (12) drehbar angeordneten, die Werkzeugaufnahmen (9) aufweisenden Revolverdreheinheit (2) ist,
mindestens einer der Werkzeugköpfe ein zur Bestrahlung eines Werkstückes (11) mit elektromagnetischer Strahlung geeigneter optischer Werkzeugkopf (3, 15, 17, 18) mit einer Werkzeug-Optikeinheit (23) zum Umlenken und/oder Formen der elektromagnetischen Strahlung ist,
Strahlungsweiterleitungsmittel zur Weiterleitung elektromagnetischer Strahlung durch den Werkzeugwechselträger hindurch vorgesehen sind,
die Strahlungsweiterleitungsmittel eine in der Revolverdreheinheit (2) angeordnete, die elektromagnetische Strahlung (7) in Richtung auf mindestens eine der Werkzeugaufnahmen (9) richtende zentrale Optikeinheit (8, 37) umfassen und zumindest eine Teilanzahl der Werkzeugaufnahmen (9) für elektromagnetische Strahlung (7) durchlässig ist,
**dadurch gekennzeichnet, dass**
die elektromagnetische Strahlung (7) mit Abstand zur Mittellängsachse der Revolvergrundeinheit (12) durch die Revolvergrundeinheit (12) geführt ist und die zentrale Optikeinheit (8, 37) kranz- oder ringförmig ist.

2. Werkzeugsystem nach Anspruch 1, **gekennzeichnet durch** Mittel zum kontrollierten ferngesteuerten Verstellen der Werkzeug-Optikeinheit (23).

3. Werkzeugsystem nach Anspruch 1 oder 2, **dadurch gekennzeichnet, dass** die Strahlungsweiterleitungsmittel mindestens einen durch den Werkzeugwechselträger hindurch verlaufenden optischen Kanal (6) umfassen.

4. Werkzeugsystem nach einem der Ansprüche 1 bis 3, **dadurch gekennzeichnet, dass** die Strahlungsweiterleitungsmittel mindestens eine Lichtleitfaser oder mindestens ein Lichtleitfaserbündel umfassen.

5. Werkzeugsystem nach einem der vorherigen Ansprüche, **dadurch gekennzeichnet, dass** die zentrale Optikeinheit (8, 37) drehfest am Revolvergrundkörper (12) fixiert ist.

6. Werkzeugsystem nach einem der Ansprüche 1 bis 4, **dadurch gekennzeichnet, dass** die zentrale Optikeinheit (8, 37) drehfest an der Revolverdreheinheit (2) fixiert ist.

7. Werkzeugsystem nach einem der vorhergehenden Ansprüche, **dadurch gekennzeichnet, dass** Mittel zur Zuführung von Medien, beispielsweise Kühlmittel, zu mindestens einer Teilanzahl der Werkzeugaufnahmen (9) vorgesehen sind.

8. Werkzeugsystem nach einem der vorherigen Ansprüche, **gekennzeichnet durch** mindestens einen zur Fixierung an mindestens einem der Werkzeugaufnahmen (9) eingerichteten spanabhebenden Werkzeugkopf (5, 27, 40, 43), mindestens einen für eine Schweißbearbeitung geeigneten Schweiß-Werkzeugkopf und/oder mindestens einen zur Zuführung von Material, z.B. einem Zusatzwerkstoff, vorgesehenen Materialzuführungskopf (34).

9. Werkzeugsystem nach einem der vorherigen Ansprüche, **dadurch gekennzeichnet, dass** an der Werkzeugaufnahme (9) zumindest zwei Werkzeugköpfe (3, 5, 15, 17, 18, 27, 34, 40, 43) in einer zur gemeinsamen Bearbeitung desselben Werkstückes (11) geeigneten Weise benachbart zueinander angeordnet und ausgerichtet sind.

10. Werkzeugsystem nach einem der vorherigen Ansprüche, **dadurch gekennzeichnet, dass** der mindestens eine optische Werkzeugkopf (3, 15, 17, 18) wechselbar ist und einen zum Eingriff in eine einheitliche Werkzeugaufnahme (9) vorgesehenen Werkzeughalter (21) aufweist.

## Claims

1. A tool system comprising a tool change carrier having at least two tool receptacles (9) and at least two tool heads (3, 5, 15, 17, 18, 27, 34, 40, 43) that are set up for fixing to the tool receptacles (9), wherein
the tool change carrier is a tool turret (1) having a turret rotation unit (2) which is arranged in a rotatable manner relative to a main turret body (12) and has the tool receptacles (9),
at least one of the tool heads is an optical tool head (3, 15, 17, 18) suitable for irradiating a workpiece (11) with electromagnetic radiation, the optical tool head (3, 15, 17, 18) having a tool optical unit (23) for deflecting and/or shaping the electromagnetic radiation,
radiation guiding means for guiding electromagnetic radiation through the tool change carrier are provided,
the radiation guiding means comprise a central optical unit (8, 37) which is arranged in the turret rotation unit (2) and directs the electromagnetic radiation (7) in the direction of at least one of the tool receptacles (9),
and at least some of the tool receptacles (9) are transmissive for electromagnetic radiation (7),
**characterized in that**
the electromagnetic radiation (7) is guided through the main turret body (12) at a distance from the longitudinal center axis of the main turret body (12) and
the central optical unit (37) is annular or ring-like.

2. Tool system according to claim 1, **characterized by** means for the controlled adjustment under remote control of the tool optical unit (23).

3. Tool system according to claim 1 or 2, **characterized in that** the radiation guiding means comprise at least one optical channel (6) extending through the tool change carrier.

4. Tool system according to one of the claims 1 to 3, **characterized in that** the radiation guiding means comprise at least one optical fiber or at least one optical fiber bundle.

5. Tool system according to one of the preceding claims, **characterized in that** the central optical unit (8, 37) is fixed to the main turret body (12) in a rotationally fixed manner.

6. Tool system according to one of the claims 1 to 4, **characterized in that** the central optical unit (8, 37) is fixed to the turret rotation unit (12) in a rotationally fixed manner.

7. Tool system according to one of the preceding claims, **characterized in that** means for feeding media, for example coolant, to at least some of the tool receptacles (9) are provided.

8. Tool system according to one of the preceding claims, **characterized by** at least one cutting tool head (5, 27, 40, 43) set up for fixing to at least one of the tool receptacles (9), at least one welding tool head suitable for welding work, and/or at least one material feeding head (34) provided for feeding material, for example an additional material.

9. Tool system according to one of the preceding claims, **characterized in that** on the tool receptacle (9) at least two tool heads (3, 5, 15, 17, 18, 27, 34, 40, 43) are arranged adjacent to one another and oriented in a suitable manner for jointly machining the same workpiece (11).

10. Tool system according to one of the preceding claims, **characterized in that** the at least one optical tool head (3, 15, 17, 18) is interchangeable and has a tool holder (21) suitable for engaging in a uniform tool receptacle (9).

## Revendications

1. Système d'outil comprenant un support d'échange d'outil doté de deux ou plusieurs logements d'outil (9) et de deux ou plusieurs têtes d'outil (3, 5, 15, 17, 18, 27, 34, 40, 43) prévues pour la fixation sur les logements d'outil (9),
le support d'échange d'outil étant une tourelle d'outil (1) doté d'une unité (2) de rotation de tourelle présentant les logements d'outil (9) et disposée à rotation par rapport à un corps de base de tourelle (12),
au moins une des têtes d'outil étant une tête optique d'outil (3, 15, 17, 18) convenant pour irradier une pièce (11) par un rayonnement électromagnétique et présentant une unité optique d'outil (23) qui oriente et/ou forme le rayonnement électromagnétique,
des moyens de transmission du rayonnement étant prévus pour transmettre le rayonnement électromagnétique à travers le support d'échange d'outil,
les moyens de transmission du rayonnement comprenant une unité optique centrale (8, 37) disposée dans l'unité (2) de rotation de tourelle et dirigeant le rayonnement électromagnétique (7) vers un ou plusieurs des logements d'outil (9), au moins une partie des logements d'outil (9) étant transparente vis-à-vis du rayonnement électromagnétique (7), **caractérisé en ce que**
le rayonnement électromagnétique (7) est guidé par l'unité de base de tourelle (12) à distance de l'axe longitudinal central de l'unité de base de tourelle (12) et
**en ce que** l'unité optique centrale (8, 37) a la forme d'une couronne ou d'un anneau.

2. Système d'outil selon la revendication 1, **caractérisé par** des moyens pour déplacer l'unité optique d'outil (23) de manière contrôlée à distance.

3. Système d'outil selon les revendications 1 ou 2, **caractérisé en ce que** les moyens de transmission du rayonnement comportent un ou plusieurs canaux optiques (6) qui traversent le support d'échange d'outil.

4. Système d'outil selon l'une des revendications 1 à 3, **caractérisé en ce que** les moyens de transmission du rayonnement comportent une ou plusieurs fibres optiques ou un ou plusieurs faisceaux de fibres optiques.

5. Système d'outil selon l'une des revendications précédentes, **caractérisé en ce que** l'unité optique centrale (8, 37) est fixée à rotation solidaire sur le corps de base de tourelle (12).

6. Système d'outil selon l'une des revendications 1 à 4, **caractérisé en ce que** l'unité optique centrale (8, 37) est fixée à rotation solidaire sur l'unité (2) de rotation de tourelle.

7. Système d'outil selon l'une des revendications précédentes, **caractérisé en ce que** des moyens d'amenée de fluide, par exemple d'agent de refroidissement, à au moins une partie des logements d'outil (9) sont prévus.

8. Système d'outil selon l'une des revendications précédentes, **caractérisé par** une ou plusieurs têtes d'outil d'usinage (5, 27, 40, 43) destinées à être fixées sur un ou plusieurs logements d'outil (9), une ou plusieurs têtes d'outil de soudage convenant pour exécuter une opération de soudage et/ou une ou plusieurs têtes (34) d'apport de matériau prévues pour apporter un matériau, par exemple un matériau d'appoint.

9. Système d'outil selon l'une des revendications précédentes, **caractérisé en ce que** deux ou plusieurs têtes d'outil (3, 5, 15, 17, 18, 27, 34, 40, 43) sont disposées sur le logement d'outil (9) et orientées au voisinage les unes des autres d'une manière qui leur permet de traiter conjointement une même pièce (11).

10. Système d'outil selon l'une des revendications précédentes, **caractérisé en ce que** la ou les têtes optiques d'outil (3, 15, 17, 18) sont échangeables et présentent un porte-outil (21) prévu pour s'engager dans un logement d'outil (9) uniforme.
